# EUROPÄISCHE PATENTSCHRIFT

(11) **EP 2 495 463 B1**
(45) Veröffentlichungstag und Bekanntmachung des Hinweises auf die Patenterteilung: **01.11.2017**
(21) Anmeldenummer: 12153041.4
(22) Anmeldetag: 30.01.2012
(51) Int. Cl.: F16C 29/00, F16B 9/02, F16H 25/24, F16H 25/20

(54) **Rohrsystem-Lineareinheit**
Linear unit with tubular system
Unité linéaire avec système tubulaire

(30) Priorität: 03.03.2011 DE 202011000479 U
(43) Veröffentlichungstag der Anmeldung: 05.09.2012
(73) Patentinhaber: RK Rose + Krieger GmbH Verbindungs- und Positioniersysteme, 32423 Minden (DE)
(72) Erfinder: Heinzel, Bernd, 32457 Porta Westfalica (DE); Neubaur, Michael, 31655 Stadthagen (DE); Palm, Dieter, 33824 Werther (DE); Braun, Johann, 32369 Rahden (DE)
(74) Vertreter: Dantz, Jan Henning

(56) Entgegenhaltungen:
- WO-A1-2010/131028
- DE-A1- 4 436 045
- DE-B4- 19 930 434
- GB-A- 117 564
- GB-A- 875 266
- US-A- 3 643 765
- US-A1- 2005 011 291

## Beschreibung

Die Erfindung betrifft eine Rohrsystem-Lineareinheit mit zwei parallel und im Abstand zueinander angeordneten Führungsstangen und einer zwischen den Führungsstangen stehenden, parallel und im Abstand dazu sowie rotierend antreibbaren Stellspindel, auf die wenigstens ein mit jeweils einer Leitmutter ausgestatteter, einstückiger Führungsschlitten aufgesetzt ist, und dass auf die Endbereiche der Führungsstangen einstückige Endelemente fest aufgesetzt sind.

Die DE 44 36 045 A1 offenbart ein Ausgleichselement, mit dem pneumatisch oder hydraulisch Kräfte gegen eine nach unten gerichtete Ladung aufgebracht werden sollen. Hierfür sind zwei parallele Zylinderrohre abgedichtet mit Endplatten verbunden, an denen jeweils ein Durchgang vorgesehen ist, der mit den Kammern in den Zylinderrohren in Verbindung steht. Zwischen den Zylinderrohren ist eine angetriebene Spindel angeordnet.

DE 199 30 434 A1 offenbart eine Rohrsystem-Lineareinheit nach dem Oberbegriff des Anspruchs 1.

Bei der in Rede stehenden Rohrsystem-Lineareinheit kann der Antrieb der Spindel manuell oder auch motorisch erfolgen. Die Rohrsystem-Lineareinheit wird zum Verstellen von Aggregaten in einem Koordinatensystem benutzt und bildet die X-, Y-Achse oder die Z-Achse dieses Systems. Die Rohrsystem-Lineareinheit wird beispielsweise für die Etikettierung von Gegenständen, zur Formatverstellung an Förderbändern, für Stecksysteme mit einer Höhenverstellung und auch bei Verpackungsmaschinen und ähnlichen Systemen eingesetzt.

Aufgrund des konstruktiven Aufbaus könnte die Rohrsystem-Lineareinheit auch als Doppelsäulenführung bezeichnet werden. Bei den bislang bekannten Rohrsystem-Lineareinheiten sind die Endelemente mit Durchgangsbohrungen versehen und werden durch Verschrauben auf die Endbereiche der Endelemente festgelegt.

Die Endelemente und jeder Führungsschlitten ist mit mittigen Schlitzen versehen, die sich von den Führungsstangen abgewandt liegenden Flächen bis zu den Durchgangsbohrungen erstrecken.

Die Leitmutter ist einteilig und wird mittels einer Buchse festgelegt. Die Führungsstangen bestehen aus Halbzeugen, die aus einem beständigen Materialbestehen. Diese Halbzeuge können Rohre oder Rundstangen sein.

Die Endelemente werden durch quer zu den Schlitzen stehende Schrauben auf den Endbereichen der Führungsstangen festgeklemmt. Da die Führungsstangen Toleranzen aufweisen, werden eventuell die Endbereiche der Führungsstangen verformt und die Endelemente bogenförmig deformiert. Die Festlegung der Endelemente wird als Klemmschlitzverbindung bezeichnet. Jeder Führungsschlitten wird ebenfalls durch die Toleranzen verformt, da die Führungsstangen nicht verformt werden dürfen, aber sie mit geringstmöglichem Spiel, jedoch leichtgängig auf den Führungsstangen verfahren werden sollen.

Nachteilig ist außer der Verformung noch, dass durch diese Verbindung Schlitze und Kanten entstehen, die verschmutzen. Ferner ist nachteilig, dass nur eine Montagefläche zur Verfügung steht, an die eine Aufspannplatte angeschraubt werden kann.

Ferner ist nachteilig, dass die dem Führungsschlitten abgewandt liegenden Öffnungen der Endelemente durch Endkappen verschlossen werden müssen.

Durch das Anziehen der Schrauben geht die Parallelität und die Koaxialität der Führungsstangen verloren, wenn auch nur einem geringen Maße.

Bei Verwendung einer Aufspannplatte für zwei bzw. mehrere Führungsschlitten werden die zuvor genannten Nachteile noch vergrößert. Dies führt dazu, dass zur Erzielung einer Ebene eine Nachbearbeitung der Führungsschlitten notwendig ist.

Durch den zuvor geschilderten konstruktiven Aufbau ist es nur möglich, Toleranzen durch Deformierung der Endelemente und des Führungsschlittens und der Führungsstangen auszugleichen. Darüber hinaus findet in den Führungsschlitten keine flächige Verbindung zu der Buchse der Leitmutter statt.

Durch die zuvor aufgeführten Nachteile wird der Aufwand für die Montage einer Rohrsystem-Lineareinheit relativ groß.

Der Erfindung liegt die Aufgabe zugrunde, eine Rohrsystem-Lineareinheit der eingangs näher beschriebenen Art konstruktiv zu vereinfachen und Verformungen zumindest der Endstücke und auch jedes Führungsschlittens und der Endbereiche der Führungsstangen zu vermeiden, so dass die Funktionalität der Rohrsystem-Lineareinheit verbessert wird.

Die gestellte Aufgabe wird dadurch gelöst, dass die Endelemente an der dem bzw. den Führungsschlitten zugewandten Seiten Sacklöcher aufweisen, in die die Endbereiche der Führungsstangen eingesteckt sind, und dass zumindest die Endbereiche der Führungsstangen in den Sacklöchern mittels aufweitbarer Spannelemente festgelegt sind.

Da nunmehr die Endelemente einstückig ausgebildet sind, wird sinngemäß ein geschlossenes Gehäuse gebildet, welches nicht deformierbar ist, so dass vollkommen ebene bzw. plane Anlageflächen für die Aufspannplatten gegeben sind. Weiterhin können je nach Bedarf die gegenüberliegenden Flächen für die Aufspannplatten verwendet werden. Da die Endbereiche der Führungsstangen nunmehr Sacklöcher sind, entfallen die ansonsten üblichen Verschlussstopfen.

Durch die Verwendung von aufweitbaren Spannelementen können die Toleranzen bei den Führungsstangen vollkommen eliminiert werden, so dass das Spiel zwischen den Spannelementen und den Führungsstangen äußerst gering und optimal ist.

Bei den Spannelementen handelt es sich um konstruktiv einfache Bauteile, die kostengünstig hergestellt werden können, so dass die dafür anfallenden Kosten tragbar sind, und es ist anzumerken, dass der Montageaufwand geringer wird, so dass eventuell diese Kosten schon eliminiert werden.

Die Spannelemente sind so ausgelegt, dass die Verbindung zwischen den Endbereichen der Führungsstangen und den Sacklöchern zentrisch und verformungsfrei erfolgt. Darüber hinaus entfallen die ansonsten sich ergebenden Schlitze, so dass die Reinigung einer Rohrsystem-Lineareinheit verbessert wird. Ferner ist die Parallelität und die Koaxialität der Führungsstangen sichergestellt.

In einer bevorzugten Ausführungsform sind die Spannelemente als Spannhülsen mit einer konischen Außenfläche ausgebildet und mit mehreren Längsschlitzen versehen. Durch die Konizität ist eine äußerst genaue Einstellung gegeben und die Längsschlitze ergeben eine Elastizität.

Diese Längsschlitze sind in gleichen Winkelabständen zueinander angeordnet und erstrecken sich wechselweise von einer Stirnfläche zur gegenüberliegenden Stirnfläche. Dabei sind die Längen der Längsschlitze größer als die halbe Länge der Spannhülse.

Der Neigungswinkel der konischen Außenfläche jeder Spannhülse liegt in vorteilhafter Weise zwischen 2 und 8 Grad.

Eine kostengünstige Lösung für die Spannhülsen kann durch fertigungstechnische Maßnahmen ohne Nacharbeit erreicht werden.

Zur Führung der Führungsstangen durch die Spannelemente innerhalb des Führungsschlittens ist vorgesehen, dass die an dem Stirnendbereich mit dem kleineren Durchmesser mehrere Gewindegänge aufweisen, und dass die Durchgangsbohrungen des Führungsschlittens mit Gewindegängen versehen sind. Dadurch wird die Anzahl der Bauteile minimiert, und die Führungsstangen werden an beiden Endbereichen des Führungsschlittens geführt. Der Vorteil dieser konischen Spannhülsen liegt dann noch darin, dass kein nennenswertes Spiel auftritt. Funktionell sind die Spannhülsen der Endelemente und der Führungsschlitten gleich, wobei die in jedem Führungsschlitten eingesetzten Spannhülsen auch als Führungshülsen bezeichnet werden könnten.

Es ist ferner vorgesehen, dass jede Führungsstange innerhalb der Durchgangsbohrung des Führungsschlittens durch zwei Spannhülsen geführt ist, wobei die Gewindegänge einander zugewandt liegen.

Da die Tiefe der in den Endelementen vorgesehenen Sacklöcher relativ gering ist, ist zur Festsetzung der Endbereiche der Führungsstangen vorgesehen, dass die in die Sacklöcher der Endelemente eingesetzten konischen Spannhülsen mittels in die Sacklöcher eingeschraubten Gewinderingen mit Außengewinde festgelegt sind. Die in die Sacklöcher eingesetzten Spannhülsen könnten auch als Klemmhülsen bezeichnet werden, da sich die Endelemente gegenüber den Führungsstangen nicht verschieben dürfen.

Zum Verdrehen der mit Außengewinde versehenen konischen Spannhülsen oder der Gewinderinge ist vorgesehen, dass diese mit inneren Ausnehmungen versehen sind, wobei bei den Spannhülsen mit Außengewinde diese an der den Gewindegängen gegenüberliegenden Seite angeordnet sind. Dadurch ist das Verdrehen der konischen Spannhülse bzw. der Gewinderinge nur mit einem speziell dafür ausgelegten Werkzeug möglich, so dass eine unsachgemäße Einstellung durch nicht fachgerechte Personen verhindert wird. Dadurch wird auch die Sicherheit der Rohrsystem-Lineareinheiten erhöht.

Die in den Führungsschlitten eingesetzte Leitmutter ist als Verschleißteil zu sehen. Zur besseren Demontage ist deshalb vorgesehen, dass die Leitmutter aus zwei Halbschalen mit Innengewindegängen besteht, die durch Schrauben miteinander verbunden sind oder, dass die Halbschalen passgenau gefertigt sind. Im Falle eines Defektes kann dann die Mutter aus der Bohrung des Führungsschlittens herausgenommen werden, ohne dass weitere Teile demontiert werden müssen.

Die Leitmutter ist gegen Verdrehung gesichert in dem jeweiligen Führungsschlitten eingesetzt.

Anhand der beiliegenden Zeichnungen wird die Erfindung noch näher erläutert.

Es zeigen:
- Figur 1: eine Rohrsystem-Lineareinheit in sprengbildlicher Darstellung,
- Figur 2: eine teilweise Darstellung der Rohrsystem-Lineareinheit, insbesondere eine Ausführung mit einem Führungsschlitten zeigend,
- Figur 3: eine teilweise Darstellung der Rohrsystem-Lineareinheit mit zwei Führungsschlitten,
- Figur 4: ein Endelement in sprengbildlicher Darstellung und
- Figur 5: eine der Figur 2 entsprechende Darstellung, jedoch in sprengbildlicher Darstellung.

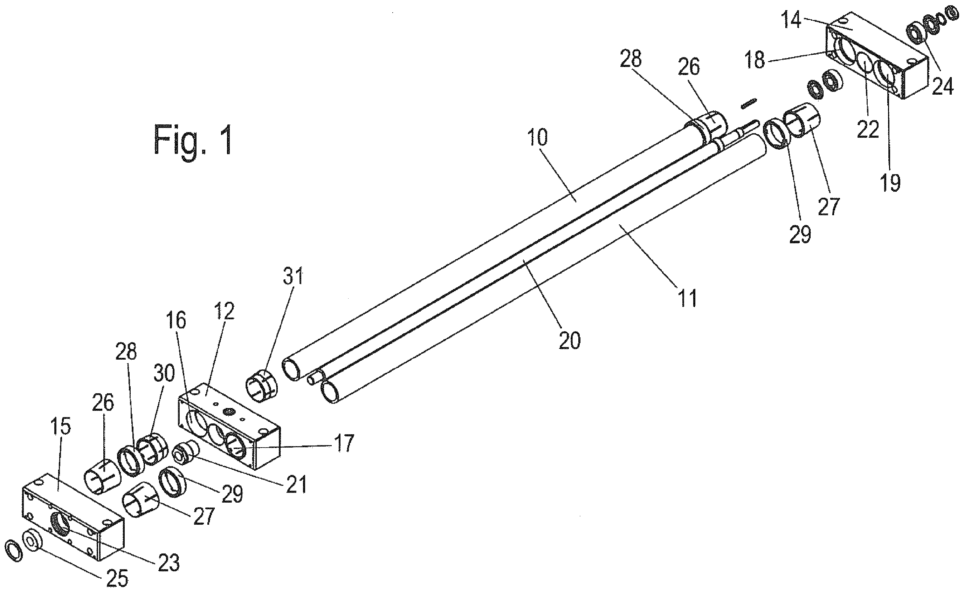

Die in der Figur 1 dargestellte Rohrsystem-Lineareinheit besteht im Wesentlichen aus den Hauptfunktionsteilen, nämlich zwei Führungsstangen 10, 11, einem Führungsschlitten 12 und zwei Endelemente 14, 15.

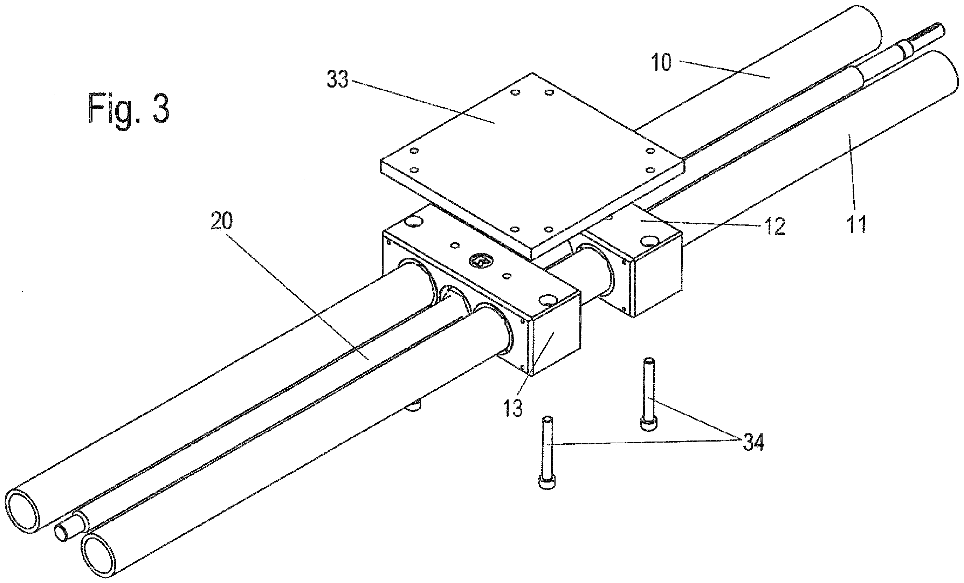

Im dargestellten Ausführungsbeispiel bestehen die Führungsstangen 10, 11 aus Rohrabschnitten, die nahtlos gezogen sind und deshalb unbearbeitet bleiben. Wie die Figuren deutlich zeigen, sind die Führungsschlitten 12, 13 (Figur 3) einstückig ausgebildet und die Endelemente 14 und jeder Führungsschlitten ist schlitzfrei. Die Führungsschlitten 12, 13 sind mit zwei im Abstand zueinander verlaufenden Durchgangsbohrungen 16, 17 ausgestattet, durch die die Führungsstangen 10, 11 geführt sind. Die Figuren zeigen ferner, dass die Endelemente 14, 15 ebenfalls einstückig ausgebildet sind, und dass sie mit zu den Durchgangsbohrungen 16, 17 der Führungsschlitten 12, 13 fluchtenden Sacklöchern 18, 19 versehen sind. Die Enden der Führungsstangen 10, 11 werden in die Sacklöcher eingesetzt und in noch näher erläuterter Weise fest mit den Endelementen 14, 15 verbunden. Mittig zwischen den Führungsstangen 10, 11 ist eine rotierend antreibbare Spindel 20 angeordnet, in der eine in dem Führungsschlitten 12, 13 eingesetzte Leitmutter 21 geführt ist. Mit den Enden greift die Spindel 20 in Durchgangsbohrungen 22, 23 der Endelemente 14, 15 ein.

Die Spindel 20 ist mittels Wälzlager 24, 25 in den Endelementen 14, 15 gelagert.

Die Enden der Führungsstangen 10, 11 sind mittels Spannelementen in Form von Spannhülsen 26, 27 in den Sacklöchern 18, 19 festgelegt. Die Spannhülsen 26, 27 sind als Spannkonus ausgebildet und werden durch Gewinderinge 28, 29 in den Sacklöchern 18, 19 fixiert.

Die Führungsstangen 10, 11 sind in den Durchgangsbohrungen 16, 17 jedes Führungsschlittens 12, 13 ebenfalls durch Spannelemente in Form von Spannhülsen 30, 31 geführt. Die Spannhülsen 30, 31 sind so ausgelegt, dass die Führungsschlitten 12, 13 mit geringstmöglichem Spiel auf den Führungsstangen 10, 11 verfahren werden. Wie die Figur 1 zeigt, wird in jede Durchgangsbohrung 16, 17 von jeder Stirnseite eine Spannhülse 30, 31 eingeführt, wobei aus Darstellungsgründen in der Figur 1 nur die Spannhülsen 30, 31 für die Durchgangsbohrung 16 dargestellt sind.

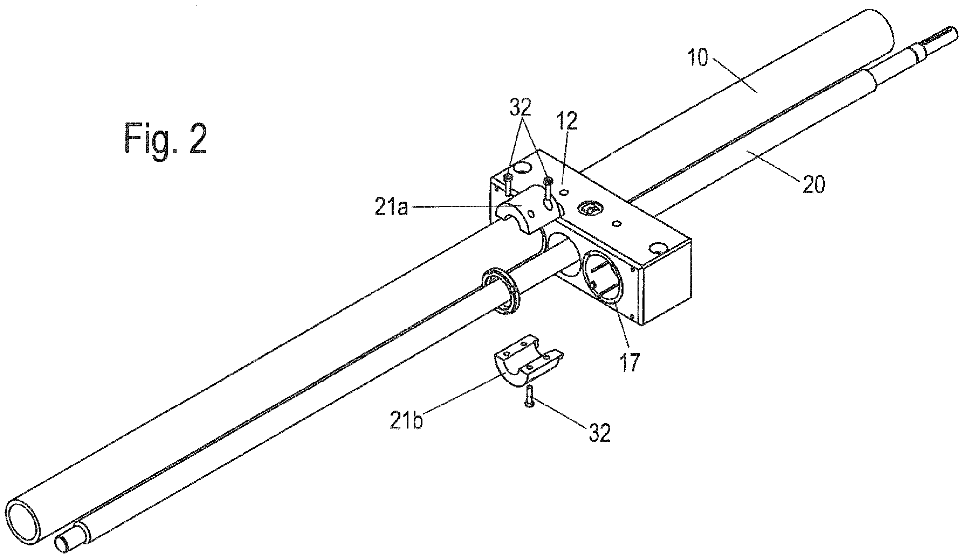

Die Figur 2 zeigt, dass der Führungsschlitten 12 auf die Führungsstangen 10, 11 aufgesetzt ist. Zur Verdeutlichung, dass in den Durchgangsbohrungen 16, 17 jedes Führungsschlittens 12, 13 Spannhülsen 30, 31 eingesetzt sind, wurde jedoch die Führungsstange 11 nicht gezeichnet. Die Figur zeigt ferner, dass die Leitmutter 21 aus zwei Halbschalen 21a und 21b besteht, und dass sie im zusammengefügten Zustand einen kreisringförmigen Querschnitt hat. Die Verbindung der beiden Halbschalen 21a, 21b erfolgt durch Schrauben 32. Die Halbschalen 21a, 21b können auch passgenau gefertigt werden, so dass keine Verschraubung notwendig ist. Die Leitmutter 21 ist gegen Verdrehung gesichert.

Die Ausführung nach der Figur 3 zeigt, dass die Rohrsystem-Lineareinheit mit zwei Führungsschlitten 12, 13 ausgestattet ist, die baugleich sind und im Abstand zueinander stehen. Die Lineareinheiten 12, 13 entsprechen den Darstellungen gemäß den Figuren 1 und 2. Die beiden Führungsschlitten 12, 13 sind durch einen Aufspannplatte 33 miteinander verbunden, die durch Schrauben 34 mit den Führungsschlitten 12, 13 fest verbunden ist. Im Gegensatz zur dargestellten Ausführung könnte die Rohrsystem-Lineareinheit auch mit mehr als zwei Führungsschlitten 12, 13 ausgestattet sein. Ferner zeigt die Figur deutlich, dass die Spindel 20 an einem Ende Ansätze aufweist, wobei in dem äußeren Ansatz eine Nut eingearbeitet ist, um beispielsweise eine Kurbel, ein Handrad zur manuellen Bedienung aufsetzen zu können. Sofern die Verstellung elektromotorisch erfolgt, könnte ein Antriebsbauteil, beispielsweise ein Zahnrad,ein Schneckenrad oder eine mit dem Getriebe verbundene Kupplung aufgesetzt werden.

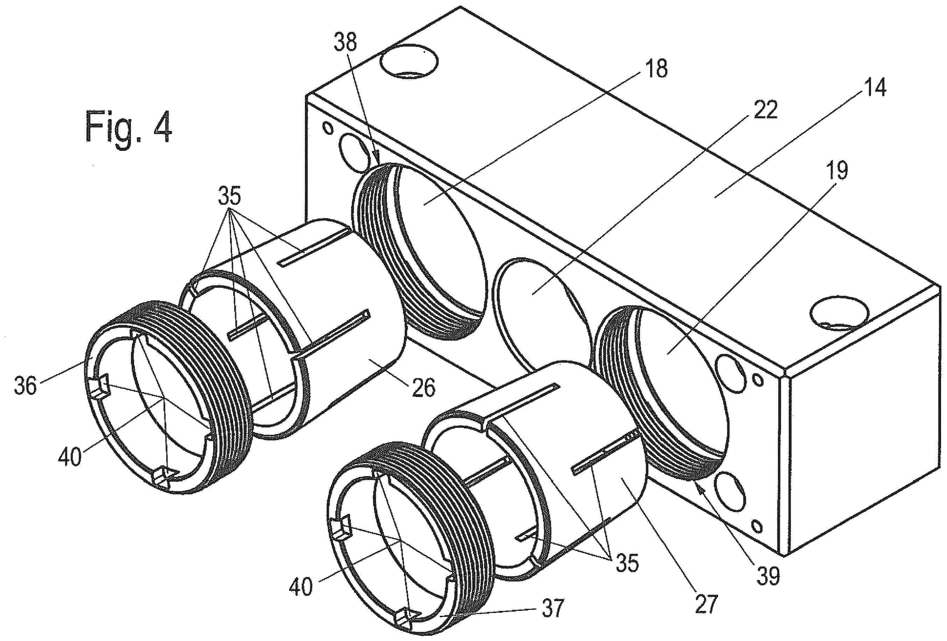

Die Figur 4 zeigt das Endelement 14 mit den Spannhülsen 26, 27 und zur Einstellung der Spannhülsen 26, 27 die Gewinderinge 36, 37.

Die Endelemente 15 einschließlich der Spannhülsen und der Gewinderinge sind baugleich, werden jedoch spiegelbildlich montiert.

Die Figur 4 zeigt, dass die Konizität der Spannhülsen 26, 27 relativ gering ist, wobei der Konuswinkel zwischen zwei und acht Grad liegt. Ferner zeigt die Figur, dass jede Spannhülse 26, 27 mit vier im Versatz von 90 Grad zueinander stehenden Längsschlitzen 35 versehen ist, die sich wechselweise von der einen Stirnfläche in Richtung zur gegenüberliegenden Stirnfläche erstrecken.

Ferner zeigt die Figur, dass die Positionierung der Spannhülsen 26, 27 durch Gewinderinge 36, 37 erfolgt, die mit einem Außengewinde versehen sind. Diese Gewinderinge 36, 37 werden in Innengewinde 38, 39 der Sacklöcher 18, 19 eingedreht.

Zur Drehung der Gewinderinge 36, 37 sind diese mit jeweils vier im Versatz von 90 Grad zueinander stehenden Ausnehmungen 40 versehen, so dass mittels eines entsprechenden Werkzeuges die Verdrehung möglich ist.

Da es sich um ein Sonderwerkzeug handelt, ist es aus Sicherheitsgründen möglich, dass nur berechtigte Personen die Einstellung vornehmen können.

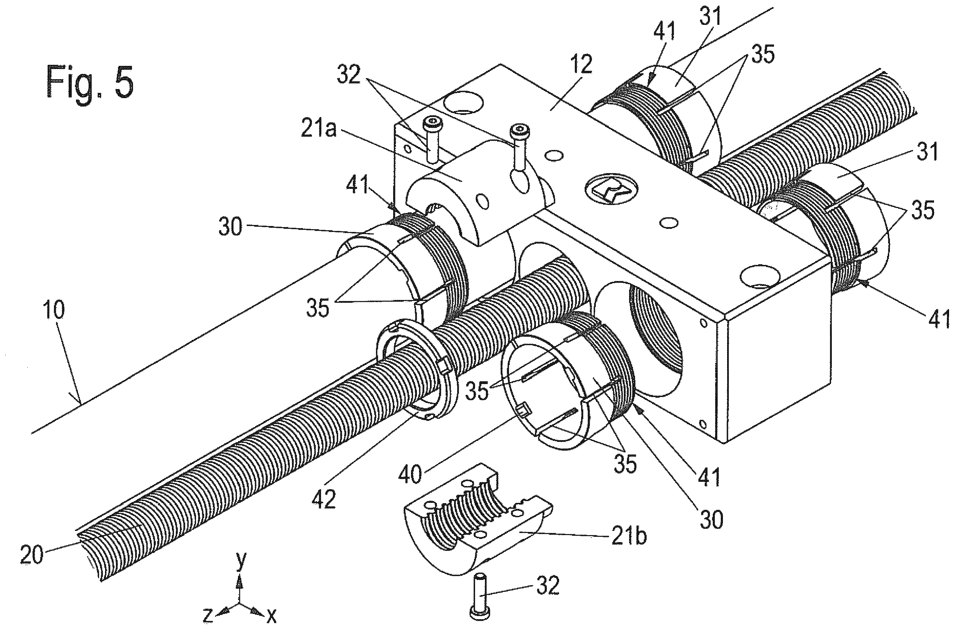

Schließlich zeigt noch die Figur 5, dass jede Führungsstange 10, 11 durch zwei Spannhülsen 30, 31 geführt ist bzw., dass der Führungsschlitten 12 durch zwei Spannhülsen 30, 31 geführt ist. Die Spannhülsen 30, 31 werden von den beiden quer zur Spindel 20 stehenden Flächen in die Durchgangsbohrungen eingesetzt.

Die Spannhülsen 30, 31 sind in den Bereichen mit dem geringeren Durchmesser mit Außengewindegängen 41 versehen, so dass jede Spannhülse 30, 31 in Innengewindegänge des Führungsschlittens 12 eingedreht werden kann.

Die Figur 5 zeigt ferner, dass die Sicherung der Leitmutter 21 durch eine Ringmutter 42 erfolgt.

Die Erfindung ist nicht auf das dargestellte Ausführungsbeispiel beschränkt. Wesentlich ist, dass zumindest die Endelemente 14, 15 schlitzfrei ausgebildet sind, und dass in bevorzugter Ausführung auch die Führungsschlitten 12, 13 schlitzfrei sind. Ferner ist von Bedeutung, dass die Endbereiche der Führungsstangen 10, 11 durch Spannelemente in Form von Spannhülsen 26, 27 mit den Endelementen 14, 15 verbunden sind, und dass die Endelemente 14, 15 dazu mit Sacklöchern 18, 19 versehen sind. Auch bevorzugt sind die Führungsschlitten 12, 13 durch Spannhülsen 30, 31 in den Durchgangsbohrungen der Führungsschlitten 12, 13 festgelegt.

## Patentansprüche

1. Rohrsystem-Lineareinheit mit zwei parallel und im Abstand zueinander angeordneten Führungsstangen (10, 11) und einer zwischen den Führungsstangen (10, 11) stehenden, rotierend antreibbaren sowie parallel und im Abstand zu den Führungsstangen (10, 11) stehenden Stellspindel (20), auf die wenigstens ein mit jeweils einer Leitmutter (21) ausgestatteter einstückiger Führungsschlitten (12, 13) aufgesetzt ist, und dass auf die Endbereiche der Führungsstangen (10, 11) einstückige Endelemente (14, 15) fest aufgesetzt sind, wobei der wenigstens eine Führungsschlitten (12, 13) mit zwei im Abstand zueinander verlaufenden Durchgangsbohrungen (16, 17) ausgestattet ist, durch die die Führungsstangen (10, 11) geführt sind, **dadurch gekennzeichnet, dass** die Endelemente (14, 15) an der dem bzw. den Führungsschlitten (12, 13) zugewandten Seiten Sacklöcher (18, 19) aufweisen, in die die Endbereiche der Führungsstangen (10, 11) eingesteckt sind, und dass zumindest die Endbereiche der Führungsstangen (10, 11) in den Sacklöchern mittels aufweitbarer Spannelemente (26, 27) festgelegt sind.

2. Rohrsystem-Lineareinheit nach Anspruch 1, **dadurch gekennzeichnet, dass** die Spannelemente als Spannhülsen (26, 27, 30, 31) mit einer konischen Außenfläche ausgebildet und mit mehreren Längsschlitzen (35) versehen sind.

3. Rohrsystem-Lineareinheit nach Anspruch 2, **dadurch gekennzeichnet, dass** die Längsschlitze (35) in gleichen Winkelabständen zueinander angeordnet sind und sich wechselweise von einer Stirnfläche zur gegenüberliegenden Stirnfläche erstrecken.

4. Rohrsystem-Lineareinheit nach einem oder mehreren der Ansprüche 2 und 3, **dadurch gekennzeichnet, dass** der Neigungswinkel der Spannhülsen (26, 27, 30, 31) zwischen zwei und acht Grad liegt.

5. Rohrsystem-Lineareinheit nach einem oder mehreren der vorstehenden Ansprüche, **dadurch gekennzeichnet, dass** die Führungsstangen (10, 11) in den Führungsschlitten (12, 13) durch konische Spannhülsen (30, 31) geführt sind und dass die an dem Stirnendbereich mit dem kleineren Durchmesser mehrere Gewindegänge aufweisen, und dass die Durchgangsbohrungen des Führungsschlittens (12, 13) mit Gewindegängen versehen sind.

6. Rohrsystem-Lineareinheit nach Anspruch 5, **dadurch gekennzeichnet, dass** jede Führungsstange (10, 11) innerhalb der Durchgangsbohrung (22, 23) des Führungsschlittens (12, 13) durch zwei konische Spannhülsen (30, 31) geführt ist, wobei die Gewindegänge einander zugewandt liegen.

7. Rohrsystem-Lineareinheit nach einem oder mehreren der Ansprüche 2 bis 4, **dadurch gekennzeichnet, dass** die in die Sacklöcher (18, 19) der Endelemente (14, 15) eingesetzten konischen Spannhülsen (26, 27) mittels in die Sacklöcher (18, 19) eingeschraubten Gewindegänge mit Gewinderingen (36, 37) mit Außengewinde festgelegt sind.

8. Rohrsystem-Lineareinheit nach einem oder mehreren der Ansprüche 2 bis 4 und 7 **dadurch gekennzeichnet, dass** die mit Gewindegängen versehenen konischen Spannhülsen (26, 27) an den den Gewindegängen gegenüberliegenden Endbereichen mit inneren Ausnehmungen (40) versehen sind.

9. Rohrsystem-Lineareinheit nach einem oder mehreren der vorstehenden Ansprüche, **dadurch gekennzeichnet, dass** die Leitmutter (21) aus zwei Halbschalen (21a, 21b) mit Innengewindegängen besteht, die durch Schrauben (32) miteinander verbunden sind, oder dass die Halbschalen (21a, 21b) passgenau gefertigt sind.

10. Rohrsystem-Lineareinheit nach einem oder mehreren der vorstehenden Ansprüche, **dadurch gekennzeichnet, dass** die Leitmutter (21) gegen Verdrehung gesichert in dem jeweiligen Führungsschlitten (12, 13) eingesetzt ist.

## Claims

1. A pipe system linear unit, having two guide rods (10, 11) arranged in parallel and spaced apart from one another, and an actuating spindle (20) standing between the guide rods (10, 11) and being rotatably drivable and parallel to and spaced from the guide rods (10, 11), on which at least one integral guide carriage (12, 13) is positioned which is respectively provided with a lead nut (21), and that integral end elements (14, 15) are fixedly positioned on the end regions of the guide rods (10, 11), wherein the at least one guide carriage (12, 13) is provided with two passage bores (16, 17) extending at a distance from one another, through which the guide rods (10, 11) are guided, **characterized in that** the end elements (14, 15) have blind holes (18, 19) on the sides facing the guide carriage or carriages (12, 13), into which the end regions of the guide rods (10, 11) are inserted, and at least the end regions of the guide rods (10, 11) are fixed in the blind holes by means of expandable tensioning elements (26, 27).

2. A pipe system linear unit according to claim 1, **characterized in that** the tensioning elements are formed as clamping sleeves (26, 27, 30, 31) with a conical outer surface and are provided with a plurality of longitudinal slots (35).

3. A pipe system linear unit according to claim 2, **characterized in that** the longitudinal slots (35) are arranged at equal angular distances from one another and extend alternately from one end face to the opposite end face.

4. A pipe system linear unit according to one or more of the claims 2 and 3, **characterized in that** the angle of inclination of the clamping sleeves (26, 27, 30, 31) is between two and eight degrees.

5. A pipe system linear unit according to one or more of the preceding claims, **characterized in that** the guide rods (10, 11) are guided in the guide carriages (12, 13) by conical clamping sleeves (30, 31), and that those at the end face region with the smaller diameter have several thread turns, and that the passage bores of the guide carriage (12, 13) are provided with thread turns.

6. A pipe system linear unit according to claim 5, **characterized in that** each guide rod (10, 11) is guided within the passage bore (22, 23) of the guide carriage (12, 13) by two conical clamping sleeves (30, 31), wherein the thread turns are disposed facing one another.

7. A pipe system linear unit according to one or more of the claims 2 to 4, **characterized in that** the conical clamping sleeves (26, 27) inserted into the blind holes (18, 19) of the end elements (14, 15) are fixed by means of thread turns screwed into the blind holes (18, 19) with threaded rings (36, 37) with external threads.

8. A pipe system linear unit according to one or more of the claims 2 to 4 and 7, **characterized in that** the conical clamping sleeves (26, 27) provided with thread turns are provided with internal recesses (40) at the end regions opposite the thread turns.

9. A pipe system linear unit according to one or more of the preceding claims, **characterized in that** the lead nut (21) consists of two half shells (21a, 21b) with internal thread turns which are connected to one another by screws (32), or that the half shells (21a, 21 b) are manufactured in a precision fit.

10. A pipe system-linear unit according to one or more of the preceding claims, **characterized in that** the lead nut (21) is inserted into the respective guide carriage (12, 13) secured against rotation.

## Revendications

1. Unité linéaire de système tubulaire comprenant deux tiges de guidage (10, 11) montées parallèlement à distance l'une de l'autre, ainsi qu'une broche de réglage (20) mobile en rotation située entre les tiges de guidage (10, 11) et montée parallèlement et à distance de celles-ci, et sur lesquelles est monté au moins un chariot de guidage (12, 13) en une seule pièce équipé d'un écrou directeur (21), dans les zones d'extrémité des tiges de guidage (10, 11) étant fixés des éléments d'extrémité en une seule pièce (14, 15), et le chariot de guidage (12, 13) étant équipé de deux perçages traversant (16, 17) s'étendant à distance l'un de l'autre au travers desquels passent les tiges de guidage (10, 11),
**caractérisée en ce que**
les éléments d'extrémité (14, 15) comportent, sur leur côté tourné vers le chariot de guidage (12, 13) des trous borgnes (18, 19) dans lesquels sont enfichées les zones d'extrémité des tiges de guidage (10, 11), et au moins les zones d'extrémité des tiges de guidage (10, 11) sont fixées dans les trous borgnes au moyen d'éléments de serrage extensibles (26, 27).

2. Unité linéaire de système tubulaire conforme à la revendication 1,
**caractérisée en ce que**
les éléments de serrage sont réalisés sous la forme de douilles de serrage (26, 27, 30, 31) ayant une surface externe conique, et sont équipés de plusieurs fentes longitudinales (35).

3. Unité linéaire de système tubulaire conforme à la revendication 2,
**caractérisée en ce que**
les fentes longitudinales (35) sont situées à la même distance angulaire les unes aux autres et s'étendent alternativement d'une surface frontale vers la surface frontale opposée.

4. Unité linéaire de système tubulaire conforme à l'une ou plusieurs des revendications 2 et 3,
**caractérisée en ce que**
l'angle d'inclinaison des douilles de serrage (26, 27, 30, 31) est situé entre 2 et 8 degrés.

5. Unité linéaire de système tubulaire conforme à l'une ou à plusieurs des revendications précédentes,
**caractérisée en ce que**
les tiges de guidage (10, 11) sont guidées dans les chariots de guidage (12, 13) par l'intermédiaire de douilles de serrage coniques (30, 31), qui comportent plusieurs spires sur leur zone d'extrémité frontale ayant le plus petit diamètre, et les perçages traversant du chariot de guidage (12, 13) comportent des spires.

6. Unité linéaire de système tubulaire conforme à la revendication 5,
**caractérisée en ce que**
chaque tige de guidage (10, 11) est guidée, à la partie interne du perçage traversant (22, 23) du chariot de guidage (12, 13) par deux douilles de serrage coniques (30, 31), les spires étant tournées l'une vers l'autre.

7. Unité linéaire de système tubulaire conforme à l'une ou à plusieurs des revendications 2 à 4,
**caractérisée en ce que**
les douilles de serrage coniques (26, 27) logées dans les trous borgnes (18, 19) des éléments d'extrémité (14, 15) sont fixés avec des bagues filetées (36, 37) ayant un filetage externe au moyen de spires vissées dans les trous borgnes (18, 19).

8. Unité linéaire de système tubulaire conforme à l'une ou à plusieurs des revendications 2 à 4 et 7,
**caractérisée en ce que**
les douilles de serrage coniques (26, 27) munies de spires comportent des évidements internes (40) dans leurs zones d'extrémité situées à l'opposé des spires.

9. Unité linéaire de système tubulaire conforme à l'une ou à plusieurs des revendications précédentes,
**caractérisée en ce que**
l'écrou directeur (21) est constitué de deux demi-coquilles (21a, 21b) équipées de spires internes qui sont reliées par des vis (32), ou les demi-coquilles (21a, 21b) sont réalisées avec précision.

10. Unité linéaire de système tubulaire conforme à l'une ou à plusieurs des revendications précédentes,
**caractérisée en ce que**
l'écrou directeur (21) est logé dans le chariot de guidage (12, 13) respectif en étant bloqué en rotation.
